# EUROPÄISCHE PATENTSCHRIFT

(11) **EP 3 344 577 B1**
(45) Veröffentlichungstag und Bekanntmachung des Hinweises auf die Patenterteilung: **15.07.2020**
(21) Anmeldenummer: 16763741.2
(22) Anmeldetag: 02.09.2016
(51) Int. Cl.: C01B 17/02, B01D 53/52, C01B 17/54, C01B 17/79, C01B 17/74

(54) **VERFAHREN UND VORRICHTUNG ZUR HERSTELLUNG VON SCHWEFELSÄURE**
METHOD AND DEVICE FOR PRODUCING SULFURIC ACID
PROCÉDÉ ET DISPOSITIF DE FABRICATION D'ACIDE SULFURIQUE

(30) Priorität: 04.09.2015 DE 102015114875
(43) Veröffentlichungstag der Anmeldung: 11.07.2018
(73) Patentinhaber: thyssenkrupp Industrial Solutions AG, 45143 Essen (DE); thyssenkrupp AG, 45143 Essen (DE)
(72) Erfinder: THIELERT, Holger, 44379 Dortmund (DE); GUETTA, Zion, 44309 Dortmund (DE)
(74) Vertreter: thyssenkrupp Intellectual Property GmbH
(86) Internationale Anmeldenummer: PCT/EP2016/070760
(87) Internationale Veröffentlichungsnummer: WO 2017/037256

(56) Entgegenhaltungen:
- EP-A1- 0 439 742
- EP-A2- 2 042 470
- WO-A1-2009/060022
- US-A1- 2002 159 938

## Beschreibung

### TECHNISCHES GEBIET

Die Erfindung betrifft ein Verfahren zur Herstellung von Schwefelsäure, wobei elementarer Schwefel in einer Aufschmelzstufe aufgeschmolzen wird und aus dem aufgeschmolzenen Schwefel anschließend Schwefelsäure erzeugt wird. Die Erfindung betrifft weiterhin eine Vorrichtung zur Durchführung dieses Verfahrens. - Im Rahmen der Erfindung wird Schwefelsäure insbesondere mittels des Kontaktverfahrens bzw. Doppelkontaktverfahrens hergestellt, wobei der aufgeschmolzene Schwefel zunächst zu Schwefeldioxid oxidiert wird und anschließend das Schwefeldioxid in einem Konverter mittels eines Katalysators zu Schwefeltrioxid weiter oxidiert wird. Aus dem Schwefeltrioxid wird dann Schwefelsäure erzeugt. Die Schwefelsäure kann vor allem zur Erzeugung von phosphathaltigen Düngemitteln eingesetzt werden.

### HINTERGRUND

Verfahren der eingangs genannten Art sind aus der Praxis in verschiedenen Ausführungsvarianten bekannt. Beim Aufschmelzen des elementaren Schwefels in der Aufschmelzstufe treten Emissionen in Form von Abgasen auf, die insbesondere Schwefeldioxid (SO₂), elementaren Schwefel, Schwefelwasserstoff (H₂S) und Wasser enthalten. Der in diesen Abgasen enthaltene elementare Schwefel kann sich beim Abkühlen in der Anlage in Form von unerwünschten festen Verunreinigungen absetzen. Im Übrigen können sich die Schwefeldämpfe entzünden und stellen insoweit ein Explosionsrisiko dar. - In der Vergangenheit wurden die Abgasemissionen häufig dampfförmig über Schornsteine an die Umgebung abgelassen. Höhere Umweltanforderungen lassen diese Handhabung bei neuen Anlagen nicht mehr zu. Weiterhin ist es auch bekannt, die in der Aufschmelzstufe entstehenden Abgase anschließend zu waschen. Zur Abkühlung und Trennung der einzelnen Abgaskomponenten ist hierzu jedoch ein nachteilhaft hoher anlagentechnischer Aufwand erforderlich.

Die US 2 520 454 A beschreibt ein Verfahren zur Herstellung von Schwefelsäure, bei welchem Schwefel verdampft wird und danach in einer Verbrennungskammer verbrannt wird und in aufeinanderfolgenden Oxidationsstufen oxidiert wird.

In der EP 0 4329 742 A1 ist ein Verfahren zur Herstellung von Oleum mit einer Konzentration von 10 bis 45 Gew.-% SO3 und/oder Schwefelsäure mit einer Konzentration von 96 bis 100Gew.-% H2S04 durch Verbrennung von Schwefel mit Luftsauerstoff, Umsetzung der SO2-haltigen Gase zu SO3-haltigen Gasen an Vanadiumkontakten und Absorption der SO3-haltigen Gase zur Erzeugung von Oleum und/oder Schwefelsäure beschrieben.

Die US 2002/0159938 A1 beschreibt ein Verfahren, bei dem in Schwefelwasserstoff enthaltender Flüssigschwefel in einen Sicherheitsbehälter eingeführt wird, um den Sicherheitsbehälter teilweise zu füllen und eine Schwefelwasserstoff-enthaltende Flüssigschwefelphase und eine Schwefelwasserstoff-enthaltende Dampfphase zu erzeugen. Ein Teil der schwefelwasserstoffhaltigen flüssigen Schwefelphase wird dann behandelt, um eine flüssige schwefelhaltige Phase und eine gasförmige schwefelwasserstoffhaltige Phase zu erzeugen, so dass die gasförmige schwefelwasserstoffhaltige Phase einen Druck von mindestens etwa 4 bar hat. Ein Teil der schwefelwasserstoffhaltigen Dampfphase wird dann unter Verwendung mindestens eines Induktors, der durch ein Antriebsfluid angetrieben wird, aus dem Containerbehälter abgezogen, wobei das Antriebsfluid die gasförmige schwefelwasserstoffhaltige Phase aus dem Containerbehälter ist. Der aus dem Induktor austretende schwefelwasserstoffhaltige Abgasstrom wird dann behandelt, um den Schwefelwasserstoffgehalt des Abgases zu reduzieren.

### BESCHREIBUNG DER ERFINDUNG

Demgegenüber liegt der Erfindung das technische Problem zugrunde, ein Verfahren der eingangs genannten Art anzugeben, mit dem die in der Aufschmelzstufe entstehenden Abgase auf einfache und in umwelttechnischer Hinsicht problemlose Weise behandelt werden können. Der Erfindung liegt weiterhin das technische Problem zugrunde, eine Vorrichtung zur Durchführung dieses Verfahrens anzugeben.

Zur Lösung dieses technischen Problems lehrt die Erfindung ein Verfahren zur Herstellung von Schwefelsäure, wobei elementarer Schwefel in einer Aufschmelzstufe aufgeschmolzen wird und wobei aus dem aufgeschmolzenen Schwefel anschließend Schwefelsäure erzeugt wird, wobei die in der Aufschmelzstufe entstehenden schwefelhaltigen Abgase einer Oxidation in einer Zusatz-Oxidationsstufe unterzogen werden, bei der schwefelhaltige Komponenten der Abgase zu Schwefeldioxid oxidiert werden und wobei das in den Abgasen enthaltene Schwefeldioxid daraufhin zu zumindest einem Reaktionsprodukt - insbesondere zu Schwefelsäure - weiterverarbeitet wird. - Der Erfindung liegt insoweit die Erkenntnis zugrunde, dass die in der Aufschmelzstufe entstehenden Abgase im Rahmen des erfindungsgemäßen Verfahrens nicht nur einfach und effektiv entsorgt werden können, sondern zusätzlich zu nutzbaren Reaktionsprodukten weiterverarbeitet werden können. Der Erfindung liegt weiterhin die Erkenntnis zugrunde, dass die erfindungsgemäße Verfahrensführung mit einer vorteilhaften Energiebilanz möglich ist.

Es liegt im Rahmen der Erfindung, dass die Herstellung der Schwefelsäure mit dem erfindungsgemäßen Verfahren zunächst in an sich bekannter Weise nach einem Kontaktverfahren bzw. Doppelkontaktverfahren erfolgt. Zweckmäßigerweise wird der in der Aufschmelzstufe aufgeschmolzene Schwefel in eine erste Oxidationsstufe eingeführt und dort mit Sauerstoff bzw. Luftsauerstoff zu Schwefeldioxid oxidiert bzw. verbrannt. Weiterhin liegt es im Rahmen der Erfindung, dass dieses Schwefeldioxid anschließend - bevorzugt gemeinsam mit Luft - in eine als Konverter ausgebildete zweite Oxidationsstufe eingeführt wird. Hier wird das Schwefeldioxid empfohlener Maßen mit Unterstützung eines Katalysators - insbesondere mittels Vanadiumpentoxid (V₂O₅) als Katalysator - zu Schwefeltrioxid (SO₃) oxidiert. Dazu durchströmt das Schwefeldioxid in dem Konverter vorzugsweise mehrere Katalysatorstufen bzw. Katalysatorbetten. Am Ende bzw. am unteren Ende des Konverters wird zweckmäßigerweise das Prozessgas mit dem Oxidationsprodukt Schwefeltrioxid abgezogen und einer Absorptionsstufe zugeführt. In dieser Absorptionsstufe wird das Schwefeltrioxid dann zu Schwefelsäure umgesetzt. Dazu wird bewährter Maßen das Prozessgas im Gegenstrom zu verdünnter Schwefelsäure - beispielsweise 98,5%iger - 99,5%iger Schwefelsäure - gebildet, wobei das Schwefeltrioxid von der verdünnten Schwefelsäure absorbiert wird und die Schwefelsäure dadurch aufkonzentriert wird.

Das erfindungsgemäße Verfahren zeichnet sich dadurch aus, dass die Aufschmelzstufe emissionsfrei bzw. im Wesentlichen emissionsfrei betrieben wird, indem sämtliche Abgase bzw. im Wesentlichen sämtliche Abgase aus der Aufschmelzstufe einer weiteren Verarbeitung bzw. einer weiteren chemischen Verarbeitung zugeführt werden. Es liegt dabei im Rahmen der Erfindung, dass die Aufschmelzstufe gasdicht bzw. im Wesentlichen gasdicht betrieben wird. Gasdicht meint dabei insbesondere, dass abgesehen von der Abführung der zu verarbeitenden Abgase und abgesehen von eventuell bei der Zufuhr des aufzuschmelzenden Schwefels eintretenden Gasen, keine weitere Gaszuführung oder Gasabführung in der Aufschmelzstufe stattfindet und dass die Aufschmelzstufe vorzugsweise unter Luftabschluss betrieben wird. Zweckmäßigerweise erfolgt die Zufuhr des aufzuschmelzenden elementaren Schwefels in die

Aufschmelzstufe mittels einer Schleuseneinrichtung, beispielsweise mit einer Zellradschleuse. Insoweit kann die Aufschmelzstufe emissionsfrei betrieben werden und lediglich die beim Aufschmelzen des Schwefels anfallenden Abgase - insbesondere Schwefeldioxid (SO₂), elementarer Schwefel, Schwefelwasserstoff (H₂S) und Wasser - werden erfindungsgemäß einer weiteren Verarbeitung bzw. chemischen Verarbeitung zugeführt. Erfindungsgemäß wird zumindest ein Teil dieser Abgase der erfindungsgemäßen Oxidation der schwefelhaltigen Komponenten unterzogen. Es ist auch denkbar, dass sämtliche Abgase bzw. im Wesentlichen sämtliche Abgase der erfindungsgemäßen Oxidation in der Zusatz-Oxidationsstufe zugeführt werden, so dass schwefelhaltige Komponenten der Abgase - im Wesentlichen elementarer Schwefel und Schwefelwasserstoff - zu Schwefeldioxid oxidiert werden. - Es liegt weiterhin im Rahmen der Erfindung, dass bereits durch das Aufschmelzen des Schwefels sowie insbesondere durch die dabei stattfindende Bildung von Wasserdampf ein ausreichender Druck in der Aufschmelzstufe bzw. im Einschmelzofen erzeugt wird, um die entstehenden Abgase der weiteren Bearbeitung zuzuführen und vor allem der weiter unten noch erläuterten Zwischen-Absorptionsstufe zuzuleiten. Dabei ist der Arbeitsdruck in der Zwischen-Absorptionsstufe zu berücksichtigen. Prinzipiell können die Abgase aus der Aufschmelzstufe bzw. aus dem Einschmelzofen auch mittels zumindest eines Gebläses bzw. mittels zumindest einer Pumpe abgezogen werden. Dadurch kann im Einschmelzofen über der Schmelze ein Unterdruck erzeugt werden, so dass die emissionsfreie Betriebsführung der Aufschmelzstufe funktionssicher unterstützt wird. Vor allem wird auf diese Weise vermieden, dass Abgase über kleine Öffnungen und Spalte aus dem Einschmelzofen an die Umgebung gelangen.

Vorzugsweise werden sämtliche Abgase aus der Aufschmelzstufe der erfindungsgemäßen Oxidation zugeführt, so dass schwefelhaltige Komponenten der Abgase zu Schwefeldioxid oxidiert werden. Zweckmäßigerweise erfolgt diese Oxidation unter Zufuhr von Sauerstoff, insbesondere Luftsauerstoff. Gemäß einer bevorzugten Ausführungsform wird dazu die Temperatur des Abgases direkt oder indirekt über die Zündtemperaturen von Schwefel (250 °C) und von Schwefelwasserstoff (270 °C) erhöht. Nach der Oxidation von Schwefel und Schwefelwasserstoff zu Schwefeldioxid sind in dem die Oxidation bzw. die Zusatz-Oxidationsstufe verlassenden Abgas im Wesentlichen nur noch Schwefeldioxid (SO₂) und die in umwelttechnischer Hinsicht unbedenklichen Gase Wasser (H₂O) sowie Stickstoff und Sauerstoff aus der Luft enthalten. Erfindungsgemäß wird das Schwefeldioxid zu zumindest einem Reaktionsprodukt weiterverarbeitet. Es liegt dabei im Rahmen der Erfindung, dass das bei der vorstehend erläuterten Oxidation der schwefelhaltigen Abgase gebildete Schwefeldioxid zumindest zum Teil, vorzugsweise vollständig zu Schwefelsäure weiterverarbeitet wird. Erfindungsgemäß wird das bei dieser Oxidation der schwefelhaltigen Abgase gebildete Schwefeldioxid zumindest zum Teil zu Schwefelsäure weiterverarbeitet. Es ist denkbar, dass dieses Schwefeldioxid in die zweite Oxidationsstufe eingeführt wird und dort zu Schwefeltrioxid oxidiert wird und dass dieses Schwefeltrioxid im Anschluss daran in der Absorptionsstufe zu Schwefelsäure umgesetzt wird. Dazu wird nachfolgend eine besonders empfohlene Ausführungsform der Erfindung erläutert.

Vorzugsweise werden die Abgase nach der Oxidation der schwefelhaltigen Abgaskomponenten zum Schwefeldioxid zusammen mit Prozessgas aus der zweiten Oxidationsstufe in eine Zwischen-Absorptionsstufe eingeführt. In dem aus der zweiten Oxidationsstufe abgeführten und in die Zwischen-Absorptionsstufe eingeführten Prozessgas ist sowohl noch nichtoxidiertes Schwefeldioxid als auch bereits durch Oxidation in der zweiten Oxidationsstufe entstandenes Schwefeltrioxid enthalten. Zweckmäßigerweise wird das der Zwischen-Absorptionsstufe aus der zweiten Oxidationsstufe zugeführte Prozessgas aus einem mittleren Bereich der zweiten Oxidationsstufe abgeführt, nachdem das Prozessgas bereits einen Teil - beispielsweise die Hälfte oder zwei Drittel - der zweiten Oxidationsstufe durchströmt hat. Gemäß empfohlener Ausführungsform der Erfindung wird dieses SO₃-haltige Prozessgas aus der zweiten Oxidationsstufe zusammen mit den Abgasen aus der Oxidation in der Zwischen-Absorptionsstufe im Gegenstrom zu Schwefelsäure bzw. verdünnter Schwefelsäure geführt. Dabei wird das Schwefeltrioxid aus dem Prozessgas von der Schwefelsäure absorbiert. Vorzugsweise wird der in den Abgasen enthaltene Wasserdampf ebenfalls von der Schwefelsäure aufgenommen. Bei der im Gegenstrom geführten Schwefelsäure mag es sich beispielsweise um 98,5%ige - 99,5%ige Schwefelsäure handeln. Diese verdünnte Schwefelsäure wird durch die Absorption des Schwefeltrioxids aus dem Prozessgas aufkonzentriert und vorzugsweise durch die Aufnahme des Wasserdampfes zugleich wieder verdünnt. Insoweit kann der Wasserdampf aus den Abgasen zur ohnehin erforderlichen Verdünnung der Schwefelsäure eingesetzt werden und dies bedeutet letztendlich eine Wassereinsparung in dem Prozess zur Schwefelsäureherstellung. Die dadurch erzeugte Schwefelsäure wird aus der Zwischen-Absorptionsstufe abgeführt. - Das in den Abgasen enthaltene Schwefeldioxid sowie das im Prozessgas noch enthaltene Schwefeldioxid wird zweckmäßigerweise aus der Zwischen-Absorptionsstufe in die zweite Oxidationsstufe eingeführt bzw. zurückgeführt. Dort erfolgt die Oxidation bzw. die katalytische Oxidation des Schwefeldioxids zum Schwefeltrioxid. Empfohlener Maßen wird das Schwefeltrioxid dann in der Absorptionsstufe (End-Absorptionsstufe) zu Schwefelsäure umgewandelt. Dazu wird vorzugsweise das Schwefeltrioxid im Gegenstrom zu Schwefelsäure bzw. zu verdünnter Schwefelsäure geführt und diese Schwefelsäure absorbiert das Schwefeltrioxid, so dass die Schwefelsäure in an sich üblicher Weise aufkonzentriert wird. Die konzentrierte Schwefelsäure wird zweckmäßigerweise mit Wasser verdünnt. Es liegt somit im Rahmen der Erfindung, dass auch das aus den Abgasen stammende Schwefeldioxid zu Schwefelsäure weiterverarbeitet wird.

Nach besonders bevorzugter Ausführungsform der Erfindung wird die von den Abgasen nach der Oxidation der schwefelhaltigen Komponenten mitgeführte thermische Energie in einer Wärmerückgewinnungs-Einrichtung zurückgewonnen. Die thermische Energie kann insbesondere in Form von Niederdruckdampf zurückgewonnen werden. Gemäß besonders empfohlener Ausführungsform wird die Wärme der in der Zwischen-Absorptionsstufe gebildeten heißen Schwefelsäure zurückgewonnen und zwar bevorzugt als Niederdruckdampf zurückgewonnen.

Zur Lösung des technischen Problems lehrt die Erfindung weiterhin eine Vorrichtung zur Herstellung von Schwefelsäure, wobei zumindest ein Einschmelzofen zum Aufschmelzen von elementarem Schwefel vorgesehen ist sowie eine an den Einschmelzofen angeschlossene erste Oxidationseinrichtung zur Oxidation des aufgeschmolzenen Schwefels zu Schwefeldioxid vorhanden ist, wobei weiterhin zumindest eine Zusatz-Oxidationseinrichtung an den Einschmelzofen angeschlossen ist, welcher Zusatz-Oxidationseinrichtung beim Aufschmelzen des Schwefels entstehende Abgase aus dem Einschmelzofen zuführbar sind, wobei in der Zusatz-Oxidationseinrichtung schwefelhaltige Komponenten der Abgase zu Schwefeldioxid oxidierbar sind und wobei eine zweite Oxidationseinrichtung vorgesehen ist, in welche das in der Zusatz-Oxidationseinrichtung entstandene Schwefeldioxid zumindest zum Teil einleitbar ist und zu Schwefeltrioxid oxidierbar ist.

Es liegt im Rahmen der Erfindung, dass der Einschmelzofen emissionsfrei bzw. emissionsdicht ausgebildet ist. Vorzugsweise erfolgt das Aufschmelzen des elementaren Schwefels im Einschmelzofen unter Luftabschluss bzw. im Wesentlichen unter Luftabschluss. Zweckmäßigerweise wird der aufzuschmelzende Schwefel über eine Schleuseneinrichtung - wie beispielsweise eine Zellradschleuse - in den Einschmelzofen eingegeben. Beim Aufschmelzen können die dabei entstehenden Abgase - insbesondere aufgrund des entstehenden Wasserdampfes - bereits einen ausreichenden Druck für die Weiterführung der Abgase zur Zwischen-Absorptionsstufe aufweisen. Es ist aber auch möglich, dass in eine an den Einschmelzofen angeschlossene Abzugsleitung zumindest ein Gebläse bzw. eine Pumpe zur Förderung der Abgase integriert ist. Die in dem Einschmelzofen entstehenden Abgase werden dann der Zusatz-Oxidationseinrichtung zugeführt, die beispielsweise in Form eines Brenners bzw. eines Inline-Brenners ausgeführt sein kann. Hier erfolgt die Oxidation der schwefelhaltigen Komponenten der Abgase (elementarer Schwefel, Schwefelwasserstoff) zu Schwefeldioxid.

Gemäß besonders empfohlener Ausführungsform der Erfindung ist an die Zusatz-Oxidationseinrichtung ein die Zwischen-Absorptionsstufe bildender Zwischen-Absorptionsturm angeschlossen, wobei die SO₂-haltigen Abgase aus der Zusatz-Oxidationseinrichtung zusammen mit Prozessgas aus der zweiten Oxidationseinrichtung in den Zwischen-Absorptionsturm einführbar sind. Zweckmäßigerweise wird somit SO₂-haltiges Abgas aus der Zusatz-Oxidationsein - richtung mit dem SO₂- und SO₃-haltigen Prozessgas aus der zweiten Oxidationseinrichtung in dem Zwischen-Absorptionsturm gemischt.

Eine besonders empfohlene Ausführungsform der Erfindung ist dadurch gekennzeichnet, dass die zweite Oxidationseinrichtung als mehrstufiger, vorzugsweise als zweistufiger Konverter ausgebildet ist, wobei eine erste Konverterstufe des Konverters mit der Maßgabe an den Zwischen-Absorptionsturm angeschlossen ist, dass Prozessgas nach Durchströmen der ersten Konverterstufe als SO₂- und SO₃-haltiges Prozessgas zusammen mit den SO₂-haltigen Abgasen aus der Zusatz-Oxidationseinrichtung in den Zwischen-Absorptionsturm einleitbar ist. Es liegt im Rahmen der Erfindung, dass in dem Zwischen-Absorptionsturm Schwefeltrioxid aus dem Prozessgas zur Erzeugung von Schwefelsäure absorbiert wird. Wie oben bereits dargelegt, werden im Zwischen-Absorptionsturm bevorzugt Prozessgas und Abgase im Gegenstrom zu Schwefelsäure geführt, so dass das Schwefeltrioxid von der Schwefelsäure absorbiert wird und die Schwefelsäure dadurch gleichsam aufkonzentriert wird. Es liegt im Rahmen der Erfindung, dass zugleich Wasserdampf aus den SO₂-haltigen Abgasen von der Schwefelsäure aufgenommen wird. Zweckmäßigerweise werden die Gase (Prozessgas und SO₂-haltige Abgase) nach dem Durchströmen des Zwischen-Absorptionsturms am oberen Ende des Zwischen-Absorptionsturms abgezogen und der zweiten Oxidationseinrichtung bzw. dem Konverter zugeführt. Nach empfohlener Ausführungsform ist eine zweite Konverterstufe des mehrstufigen bzw. zweistufigen Konverters mit der Maßgabe an den Zwischen-Absorptionsturm angeschlossen, dass SO₂-haltiges Abgas und SO₂-haltiges Prozessgas aus dem Zwischen-Absorptionsturm in die zweite Konverterstufe einführbar ist, so dass die Abgase und das Prozessgas dann die zweite Konverterstufe durchströmen und das in den Gasen enthaltene Schwefeldioxid in der zweiten Konverterstufe zu Schwefeltrioxid oxidiert wird.

Zweckmäßigerweise ist an die zweite Oxidationseinrichtung bzw. an den Konverter die Absorptionsstufe in Form eines Absorptionsturms (End-Absorptionsturm) angeschlossen und das aus der zweiten Oxidationseinrichtung stammende Schwefeltrioxid wird vorzugsweise in dem Absorptionsturm bzw. End-Absorptionsturm absorbiert. Es empfiehlt sich, dass das aus der zweiten Oxidationseinrichtung stammende Schwefeltrioxid in dem Absorptionsturm im Gegenstrom zu Schwefelsäure bzw. zu verdünnter Schwefelsäure - beispielsweise 98,5%iger - 99,5%iger Schwefelsäure - geführt wird, so dass das Schwefeltrioxid von der Schwefelsäure absorbiert wird und die Schwefelsäure dabei aufkonzentriert wird. Es liegt im Rahmen der Erfindung, dass die dabei erzeugte konzentrierte Schwefelsäure anschließend mit Wasser verdünnt wird.

Gemäß empfohlener Ausführungsform der Erfindung ist an den Zwischen-Absorptionsturm eine Wärmerückgewinnungs-Einrichtung angeschlossen. Mit dieser Wärmerückgewinnungs-Einrichtung kann aus den Abgasen der Zusatz-Oxidationseinrichtung und/oder aus den Absorptionsvorgängen im Zwischen-Absorptionsturm stammende thermische und chemische Energie zurückgewonnen werden. Zweckmäßigerweise wird die in dem Zwischen-Absorptionsturm aufgefangene heiße Schwefelsäure durch zumindest einen Wärmetauscher geführt und die thermische und chemische Energie bzw. Wärmeenergie wird vorzugsweise in Form von erhitztem Niederdruckdampf weitergeführt bzw. weiterverwendet.

Der Erfindung liegt die Erkenntnis zugrunde, dass die bei der Schwefelsäureherstellung beim Aufschmelzen des elementaren Schwefels entstehenden Abgase nicht verworfen werden müssen, sondern effektiv weiterverarbeitet werden können und insbesondere für die Schwefelsäureherstellung genutzt werden können. Die bei der Abgasbehandlung anfallende thermische Energie kann fernerhin auf einfache Weise weitgehend zurückgewonnen werden. Insoweit liegt der Erfindung die Erkenntnis zugrunde, dass im Rahmen der beim Aufschmelzen des Schwefels entstehenden Emissionen eine sehr weitgehende stoffliche und energetische Verwertung möglich ist. Die eingangs im Zusammenhang mit dem Stand der Technik geschilderten Nachteile können bei dem erfindungsgemäßen Verfahren effektiv und funktionssicher vermieden werden. Zunächst müssen in umwelttechnischer Hinsicht bedenkliche Abgase nicht an die Umgebung abgegeben werden, sondern können im Prozess der Schwefelsäureherstellung verwertet werden. Weiterhin können im Rahmen des erfindungsgemäßen Verfahrens aus den Emissionsdämpfen resultierende Feststoffablagerungen in Form von festem Schwefel erheblich reduziert bzw. minimiert werden. Auch mit den Emissionsdämpfen verbundene Explosionsgefahren können weitgehend vermieden werden. Hervorzuheben ist, dass das erfindungsgemäße Verfahren verhältnismäßig einfach und wenig aufwendig betrieben werden kann und somit auch mit relativ geringen Kosten realisierbar ist.

### FIGURENBESCHREIBUNG

Nachfolgend wird die Erfindung anhand einer lediglich ein Ausführungsbeispiel darstellenden Zeichnung näher erläutert.

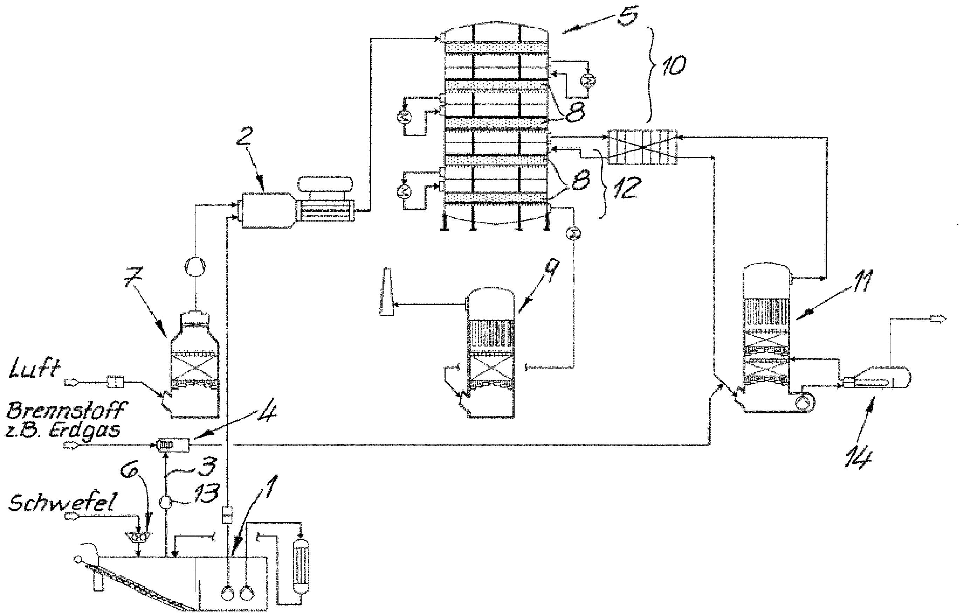

### DETAILLIERTE BESCHREIBUNG DER FIGUR

Die einzige Figur zeigt schematisch das Schaltbild einer Vorrichtung für die Durchführung des erfindungsgemäßen Verfahrens zur Herstellung von Schwefelsäure. Die Vorrichtung weist einen Einschmelzofen 1 zum Aufschmelzen von elementarem Schwefel auf (Aufschmelzstufe). Gemäß besonders bevorzugter Ausführungsform der Erfindung wird dieser Einschmelzofen 1 emissionsfrei bzw. emissionsdicht ausgebildet. Damit ist insbesondere gemeint, dass abgesehen von dem nachfolgend noch erläuterten Abzug der Abgase aus dem Einschmelzofen 1 keine Emissionen bzw. Abgase an die Umgebung abgegeben werden. Zweckmäßigerweise erfolgt das Aufschmelzen in dem Einschmelzofen 1 unter Luftabschluss. Der aufzuschmelzende Schwefel wird dem Einschmelzofen 1 vorzugsweise über eine Schleuseneinrichtung aufgegeben (Pfeil in Figur), die bevorzugt und im Ausführungsbeispiel als Zellradschleuse 6 ausgebildet ist.

Der aufgeschmolzene Schwefel wird von dem Einschmelzofen 1 einer ersten Oxidationseinrichtung 2 zugeführt, die bevorzugt und im Ausführungsbeispiel als Brenner ausgebildet ist. Hier wird der aufgeschmolzene Schwefel mit Hilfe von Luftsauerstoff oxidiert bzw. verbrannt, so dass Schwefeldioxid (SO₂) entsteht. Die der ersten Oxidationseinrichtung 2 zugeführte Luft (Pfeil in Figur) wird zuvor in einem Trockenturm 7 getrocknet, beispielsweise unter Zuhilfenahme von konzentrierter Schwefelsäure. Das in der ersten Oxidationseinrichtung 2 gebildete Schwefeldioxid wird anschließend in die als Konverter ausgebildete zweite Oxidationseinrichtung 5 eingeführt.
In der zweiten Oxidationseinrichtung 5 bzw. in dem Konverter wird das Schwefeldioxid mittels eines Katalysators - vorzugsweise mittels Vanadiumpentoxid (V₂O₅) - zu Schwefeltrioxid (SO₃) oxidiert. Vorzugsweise und im Ausführungsbeispiel wird der Konverter von dem Schwefeldioxid von oben nach unten durchströmt. Dabei ist eine Mehrzahl von Katalysatorböden 8 vorgesehen. Aus dieser zweiten Oxidationseinrichtung 5 bzw. aus diesem Konverter wird das Schwefeltrioxid bzw. das schwefeltrioxidhaltige Prozessgas einer Absorptionsstufe in Form eines End-Absorptionsturms 9 zugeleitet. In diesem End-Absorptionsturm 9 wird aus dem Schwefeltrioxid Schwefelsäure gebildet. Dazu wird bevorzugt und im Ausführungsbeispiel das schwefeltrioxidhaltige Prozessgas im Gegenstrom zu Schwefelsäure bzw. verdünnter Schwefelsäure - im Ausführungsbeispiel 98,5%iger - 99,5%iger Schwefelsäure - geführt. Dadurch wird das Schwefeltrioxid in der Schwefelsäure absorbiert und die Schwefelsäure gleichsam aufkonzentriert. Anschließend wird diese aufkonzentrierte Schwefelsäure je nach Bedarf und gewünschter Verdünnung wiederum mit Wasser verdünnt.

Der die zweite Oxidationseinrichtung 5 bildende Konverter ist vorzugsweise und im Ausführungsbeispiel als zweistufiger Konverter ausgebildet. Empfohlener Maßen und im Ausführungsbeispiel wird Prozessgas nach Durchlaufen der ersten Konverterstufe 10 mit den dort angeordneten Katalysatorböden 8 als SO₂- und SO₃-haltiges Prozessgas aus der ersten Konverterstufe 10 in die als Zwischen-Absorptionsturm 11 ausgebildete Zwischen-Absorptionsstufe eingeführt. Bevorzugt und im Ausführungsbeispiel wird dabei das Prozessgas von unten in den Zwischen-Absorptionsturm 11 eingeführt und im Gegenstrom zu verdünnter Schwefelsäure - beispielsweise 98,5%iger - 99,5%iger Schwefelsäure - geführt. Dadurch wird Schwefeltrioxid aus dem Prozessgas in der Schwefelsäure absorbiert und die Schwefelsäure aufkonzentriert. Zweckmäßigerweise wird am oberen Ende des Zwischen-Absorptionsturmes 11 das Prozessgas bzw. das schwefeldioxidhaltige Prozessgas in den Konverter zurückgeführt und zwar in die im Ausführungsbeispiel unterhalb der ersten Konverterstufe 10 angeordnete zweite Konverterstufe 12 mit ihren Katalysatorböden 8. Das in dem Prozessgas enthaltene Schwefeldioxid wird in der zweiten Konverterstufe 12 katalytisch zum Schwefeltrioxid oxidiert und das Schwefeltrioxid wird dann - wie bereits beschrieben - am unteren Ende des Konverters abgezogen und in den End-Absorptionsturm 9 eingeführt.

Erfindungsgemäß werden die in der Aufschmelzstufe bzw. in dem Einschmelzofen 1 während des Aufschmelzens entstehenden schwefelhaltigen Abgase einer Oxidation unterzogen. Hierzu werden im Ausführungsbeispiel diese Abgase über die Abzugsleitung 3 aus dem Einschmelzofen 1 abgezogen und der Zusatz-Oxidationseinrichtung 4 zugeführt. Vorzugsweise und im Ausführungsbeispiel weist die Zusatz-Oxidationseinrichtung 4 einen Brenner auf, der mit Brennstoff, z.B. Erdgas, versorgt wird (Pfeil in Figur), und in dieser Zusatz-Oxidationseinrichtung 4 wird der im Abgas enthaltene elementare Schwefel (S) sowie der im Abgas enthaltene Schwefelwasserstoff (H₂S) zu Schwefeldioxid oxidiert und zwar mit Hilfe von Luftsauerstoff. Im Ausführungsbeispiel nach der Figur ist ein Gebläse 13 vorgesehen, mit dessen Hilfe die Abgase der Zusatz-Oxidationseinrichtung 4 zugeführt werden können. Es ist auch möglich, dass sich im Einschmelzofen 1 - insbesondere aufgrund des im Abgas enthaltenen Wasserdampfes - bereits ein ausreichend hoher Druck aufbaut, so dass ein solches Gebläse 13 nicht erforderlich ist. Der in den Abgasen enthaltene Wasserdampf entsteht im Übrigen insbesondere dann, wenn nach einer Ausführungsvariante der in den Einschmelzofen 1 eingeführte Schwefel aus sicherheitstechnischen Gründen befeuchtet worden ist. Die den Einschmelzofen 1 verlassenden Abgase enthalten vor allem Schwefeldioxid (SO₂), elementaren Schwefel (S), Schwefelwasserstoff (H₂S) sowie Wasserdampf (H₂O). Nach der Oxidation der schwefelhaltigen Abgaskomponenten S und H₂S in der Zusatz-Oxidationseinrichtung 4 sind in den Abgasen im Wesentlichen noch Schwefeldioxid (SO₂) und Wasser (H₂O) neben Stickstoff und Sauerstoff enthalten.

Die aus der Zusatz-Oxidationseinrichtung 4 austretenden schwefeldioxidhaltigen Abgase werden empfohlener Maßen und im Ausführungsbeispiel mit dem Prozessgas aus der ersten Konverterstufe 10 in den Zwischen-Absorptionsturm 11 eingeleitet. Somit wird das schwefeldioxidhaltige Abgas mit dem Prozessgas im Gegenstrom zu der bereits erwähnten Schwefelsäure geführt. Dadurch wird der in den Abgasen enthaltene Wasserdampf von der Schwefelsäure absorbiert, so dass die Aufkonzentration der Schwefelsäure durch das Schwefeltrioxid aufgrund des aufgenommenen Wassers teilweise kompensiert wird. Insoweit kann für die Verdünnung der sich am unteren Ende des Zwischen-Absorptionsturms 11 ansammelnden aufkonzentrierten Schwefelsäure erforderliches Wasser eingespart werden.

Ein besonderer Aspekt des erfindungsgemäßen Verfahrens liegt in der bevorzugten Rückgewinnung der bei dem Prozess anfallenden thermischen und chemischen Energie. Hierzu ist bevorzugt und im Ausführungsbeispiel am unteren Ende des Zwischen-Absorptionsturms eine Wärmerückgewinnungs-Einrichtung 14 angeschlossen. Die heiße konzentrierte Schwefelsäure kann aus dem Sumpf des Zwischen-Absorptionsturms der Wärmerückgewinnungs-Einrichtung 14 zugeführt werden und hier kann Wärme auf Wasser bzw. Dampf übertragen werden, so dass die thermische und chemische Energie vorzugsweise in Form von Niederdruckdampf weitergeleitet und weitergenutzt werden kann.

## Patentansprüche

1. Verfahren zur Herstellung von Schwefelsäure, wobei elementarer Schwefel in einer Aufschmelzstufe aufgeschmolzen wird und aus dem aufgeschmolzenen Schwefel anschließend Schwefelsäure erzeugt wird, wobei in der Aufschmelzstufe entstehende Abgase einer Oxidation in einer Zusatz-Oxidationsstufe unterzogen werden, bei der schwefelhaltige Komponenten der Abgase zu Schwefeldioxid oxidiert werden, und wobei dieses Schwefeldioxid zu zumindest einem Reaktionsprodukt weiterverarbeitet wird **dadurch gekennzeichnet, dass**
die Aufschmelzstufe emissionsfrei betrieben wird, indem sämtliche Abgase aus der Aufschmelzstufe einer weiteren Verarbeitung zugeführt werden und wobei zumindest ein Teil dieser Abgase der Oxidation der schwefelhaltigen Komponenten unterzogen werden, und
das in den Abgasen enthaltene Schwefeldioxid zumindest zum Teil zu Schwefelsäure weiterverarbeitet wird.

2. Verfahren nach Anspruch 1, wobei der in der Aufschmelzstufe aufgeschmolzene Schwefel in einer ersten Oxidationsstufe zu Schwefeldioxid oxidiert wird, wobei das Schwefeldioxid in einer zweiten Oxidationsstufe zu Schwefeltrioxid oxidiert wird, und wobei das Schwefeltrioxid in einer Absorptionsstufe zu Schwefelsäure umgesetzt wird.

3. Verfahren nach einem der Ansprüche 1 oder 2, wobei sämtliche Abgase der Oxidation der schwefelhaltigen Komponenten unterzogen werden.

4. Verfahren nach einem der Ansprüche 1 bis 3, wobei die Aufschmelzstufe gasdicht betrieben wird.

5. Verfahren nach einem der Ansprüche 2 bis 4, wobei das in den Abgasen enthaltene Schwefeldioxid in die zweite Oxidationsstufe eingeführt wird und dort zu Schwefeltrioxid oxidiert wird und wobei das Schwefeltrioxid dann in der Absorptionsstufe zu Schwefelsäure umgesetzt wird.

6. Verfahren nach einem der Ansprüche 2 bis 5, wobei die Abgase nach der Oxidation der schwefelhaltigen Abgaskomponenten mit Prozessgas aus der zweiten Oxidationsstufe in eine Zwischen-Absorptionsstufe eingeführt werden und wobei Schwefeldioxid der Abgase oder des Prozessgases aus der Zwischen-Absorptionsstufe in die zweite Oxidationsstufe geführt wird.

7. Verfahren nach Anspruch 6, wobei die Abgase und das Prozessgas aus der zweiten Oxidationsstufe in der Zwischen-Absorptionsstufe im Gegenstrom zu Schwefelsäure geführt werden, so dass Schwefeltrioxid aus dem Prozessgas von der Schwefelsäure absorbiert wird und vorzugsweise auch Wasserdampf aus den Abgasen von der Schwefelsäure aufgenommen wird.

8. Verfahren nach einem der Ansprüche 1 bis 7, wobei die von den Abgasen nach der Oxidation mitgeführte thermische Energie in einer Wärmerückgewinnungs-Einrichtung zurückgewonnen wird, insbesondere in Form von Niederdruckdampf zurückgewonnen wird.

9. Vorrichtung zur Herstellung von Schwefelsäure zur Durchführung des Verfahrens nach einem der Ansprüche 1 bis 8, wobei zumindest ein Einschmelzofen (1) zum Aufschmelzen von elementarem Schwefel vorgesehen ist sowie eine an den Einschmelzofen (1) angeschlossene erste Oxidationseinrichtung (2), in welcher aufgeschmolzener Schwefel zu Schwefeldioxid oxidierbar ist, wobei an die erste Oxidationseinrichtung (2) eine zweite Oxidationseinrichtung (5) angeschlossen ist, in welcher das Schwefeldioxid aus der ersten Oxidationseinrichtung (2) zu Schwefeltrioxid oxidierbar ist, wobei weiterhin zumindest eine Zusatz-Oxidationseinrichtung (4) an den Einschmelzofen (1) angeschlossen ist, wobei die beim Aufschmelzen des Schwefels entstehenden Abgase aus dem Einschmelzofen (1) abziehbar sind und zumindest zum Teil der Zusatz-Oxidationseinrichtung (4) zuführbar sind, wobei in der Zusatz-Oxidationseinrichtung (4) schwefelhaltige Komponenten der Abgase zu Schwefeldioxid oxidierbar sind, und wobei dieses Schwefeldioxid in der zweiten Oxidationseinrichtung (5) zu Schwefeltrioxid oxidierbar ist.

10. Vorrichtung nach Anspruch 9, wobei der Einschmelzofen (1) emissionsfrei ausgebildet ist.

11. Vorrichtung nach einem der Ansprüche 9 oder 10, wobei an die Zusatz-Oxidationseinrichtung (4) ein eine/die Zwischen-Absorptionsstufe bildender Zwischen-Absorptionsturm (11) angeschlossen ist, wobei die schwefeldioxid-haltigen Abgase aus der Zusatz-Oxidationseinrichtung (4) zusammen mit dem Prozessgas aus der zweiten Oxidationseinrichtung (5) in den Zwischen-Absorptionsturm (11) einführbar sind.

12. Vorrichtung nach Anspruch 11, wobei die zweite Oxidationseinrichtung (5) als mehrstufiger, vorzugsweise zweistufiger Konverter ausgebildet ist, wobei eine erste Konverterstufe (10) des Konverters mit der Maßgabe an den Zwischen-Absorptionsturm (11) angeschlossen ist, dass Prozessgas nach Durchströmen der ersten Konverterstufe (10) mit den schwefeldioxidhaltigen Abgasen aus der Zusatz-Oxidationseinrichtung (4) in den Zwischen-Absorptionsturm (11) einleitbar ist.

13. Vorrichtung nach Anspruch 12, wobei eine zweite Konverterstufe (12) des Konverters mit der Maßgabe an den Zwischen-Absorptionsturm (11) angeschlossen ist, dass Abgase und Prozessgas aus dem Zwischen-Absorptionsturm (11) in die zweite Konverterstufe (12) einführbar sind.

14. Vorrichtung nach einem der Ansprüche 9 bis 13, wobei an die zweite Oxidationseinrichtung (5) die Absorptionsstufe in Form eines End-Absorptionsturmes (9) angeschlossen ist und wobei aus der zweiten Oxidationseinrichtung (5) stammendes Schwefeltrioxid in dem End-Absorptionsturm (9) absorbiert wird.

15. Vorrichtung nach einem der Ansprüche 9 bis 14, wobei an den Zwischen-Absorptionsturm (11) eine Wärmerückgewinnungs-Einrichtung (14) angeschlossen ist, mit welcher Wärmerückgewinnungs-Einrichtung thermische und chemische Energie aus den Abgasen zurückgewonnen wird.

## Claims

1. Process for preparing sulfuric acid, wherein elemental sulfur is melted in a melting stage and sulfuric acid is subsequently produced from the molten sulfur, offgases formed in the melting stage are subjected to oxidation in a supplementary oxidation stage in which sulfur-containing components of the offgases are oxidized to sulfur dioxide and this sulfur dioxide is processed further to give at least one reaction product, **characterized in that** the melting stage is operated in an emission-free manner by feeding of all offgases from the melting stage to further processing and at least part of these offgases being subjected to oxidation of the sulfur-containing components and
the sulfur dioxide present in the offgases is at least partly processed further to give sulfuric acid.

2. Process according to Claim 1, wherein the sulfur which has been melted in the melting stage is oxidized to sulfur dioxide in a first oxidation stage and the sulfur dioxide is oxidized to sulfur trioxide in a second oxidation stage and the sulfur trioxide is converted into sulfuric acid in an absorption stage.

3. Process according to either of Claims 1 or 2, wherein all offgases are subjected to the oxidation of the sulfur-containing components.

4. Process according to any of Claims 1 to 3, wherein the melting stage is operated in a gastight manner.

5. Process according to any of Claims 2 to 4, wherein the sulfur dioxide present in the offgases is introduced into the second oxidation stage and is oxidized there to sulfur trioxide and the sulfur trioxide is then converted into sulfuric acid in the absorption stage.

6. Process according to any of Claims 2 to 5, wherein the offgases after oxidation of the sulfur-containing offgas components are introduced together with process gas from the second oxidation stage into an intermediate absorption stage and sulfur dioxide of the offgases or of the process gas is fed from the intermediate absorption stage into the second oxidation stage.

7. Process according to Claim 6, wherein the offgases and the process gas from the second oxidation stage are conveyed in countercurrent to sulfuric acid in the intermediate absorption stage, so that sulfur trioxide is absorbed from the process gas by the sulfuric acid and water vapour is preferably also absorbed from the offgases by the sulfuric acid.

8. Process according to any of Claims 1 to 7, wherein the thermal energy carried by the offgases after the oxidation is recovered in a heat recovery device, in particular recovered in the form of low-pressure steam.

9. Apparatus for preparing sulfuric acid for carrying out the process according to any of Claims 1 to 8, wherein at least one melting oven (1) for melting elemental sulfur is provided and also a first oxidation facility (2) which is connected to the melting oven (1) and in which molten sulfur can be oxidized to sulfur dioxide, a second oxidation facility (5) in which the sulfur dioxide from the first oxidation facility (2) can be oxidized to sulfur trioxide is connected to the first oxidation facility (2), at least one supplementary oxidation facility (4) is also connected to the melting oven (1), with the offgases formed in the melting of the sulfur being able to be taken off from the melting oven (1) and at least partly be fed to the supplementary oxidation facility (4), with sulfur-containing components of the offgases being able to be oxidized to sulfur-dioxide in the supplementary oxidation facility (4) and with this sulfur dioxide being able to be oxidized to sulfur-trioxide in the second oxidation facility (5).

10. Apparatus according to Claim 9, wherein the melting oven (1) is made emission-free.

11. Apparatus according to either of Claims 9 or 10, wherein an intermediate absorption tower (11) forming an/the intermediate absorption stage is connected to the supplementary oxidation facility (4), with the sulfur dioxide-containing offgases from the supplementary oxidation facility (4) being able to be introduced together with the process gas from the second oxidation facility (5) into the intermediate absorption tower (11).

12. Apparatus according to Claim 11, wherein the second oxidation facility (5) is configured as a multistage, preferably two-stage, converter, with a first converter stage (10) of the converter being connected to the intermediate absorption tower (11) in such a way that process gas can, after flowing through the first converter stage (10), be introduced together with the sulfur-dioxide-containing offgases from the supplementary oxidation facility (4) into the intermediate absorption tower (11).

13. Apparatus according to Claim 12, where a second converter stage (12) of the converter is connected to the intermediate absorption tower (11) in such a way that offgases and process gas can be introduced from the intermediate absorption tower (11) into the second converter stage (12).

14. Apparatus according to any of Claims 9 to 13, wherein the absorption stage in the form of a final absorption tower (9) is connected to the second oxidation facility (5) and sulfur trioxide coming from the second oxidation facility (5) is absorbed in the final absorption tower (9).

15. Apparatus according to any of Claims 9 to 14, wherein a heat recovery device (14) is connected to the intermediate absorption tower (11) and thermal and chemical energy is recovered from the offgases by means of this heat recovery device.

## Revendications

1. Procédé de fabrication d'acide sulfurique, dans lequel du soufre élémentaire est fondu dans une étape de fusion et de l'acide sulfurique est ensuite généré à partir du soufre fondu, dans lequel les gaz d'échappement formés dans l'étape de fusion sont soumis à une oxydation dans une étape d'oxydation supplémentaire, lors de laquelle des composants contenant du soufre des gaz d'échappement sont oxydés en dioxyde de soufre, et dans lequel ce dioxyde de soufre est transformé en au moins un produit de réaction, **caractérisé en ce que**
l'étape de fusion est exploitée sans émission en introduisant tous les gaz d'échappement de l'étape de fusion dans un traitement ultérieur et dans lequel au moins une partie de ces gaz d'échappement sont soumis à l'oxydation des composants contenant du soufre, et
le dioxyde de soufre contenu dans les gaz d'échappement est au moins partiellement transformé en acide sulfurique.

2. Procédé selon la revendication 1, dans lequel le soufre fondu dans l'étape de fusion est oxydé dans une première étape d'oxydation en dioxyde de soufre, dans lequel le dioxyde de soufre est oxydé dans une deuxième étape d'oxydation en trioxyde de soufre, et dans lequel le trioxyde de soufre est mis en réaction dans une étape d'absorption pour former de l'acide sulfurique.

3. Procédé selon l'une quelconque des revendications 1 ou 2, dans lequel tous les gaz d'échappement sont soumis à l'oxydation des composants contenant du soufre.

4. Procédé selon l'une quelconque des revendications 1 à 3, dans lequel l'étape de fusion est exploitée de manière étanche aux gaz.

5. Procédé selon l'une quelconque des revendications 2 à 4, dans lequel le dioxyde de soufre contenu dans les gaz d'échappement est introduit dans la deuxième étape d'oxydation et y est oxydé en trioxyde de soufre et dans lequel le trioxyde de soufre est alors mis en réaction dans l'étape d'absorption pour former de l'acide sulfurique.

6. Procédé selon l'une quelconque des revendications 2 à 5, dans lequel les gaz d'échappement sont introduits après l'oxydation des composants de gaz d'échappement contenant du soufre, avec un gaz de processus issu de la deuxième étape d'oxydation, dans une étape d'absorption intermédiaire et dans lequel le dioxyde de soufre des gaz d'échappement ou du gaz de processus issu de l'étape d'absorption intermédiaire est introduit dans la deuxième étape d'oxydation.

7. Procédé selon la revendication 6, dans lequel les gaz d'échappement et le gaz de processus issu de la deuxième étape d'oxydation sont introduits dans l'étape d'absorption intermédiaire à contre-courant de l'acide sulfurique, de telle sorte que le trioxyde de soufre issu du gaz de processus soit absorbé par l'acide sulfurique, et de la vapeur d'eau issue des gaz d'échappement est de préférence également absorbée par l'acide sulfurique.

8. Procédé selon l'une quelconque des revendications 1 à 7, dans lequel l'énergie thermique transportée par les gaz d'échappement après l'oxydation est récupérée dans une unité de récupération de chaleur, notamment est récupérée sous la forme de vapeur basse pression.

9. Dispositif pour la fabrication d'acide sulfurique pour la réalisation du procédé selon l'une quelconque des revendications 1 à 8, dans lequel au moins un four de fusion (1) pour la fusion de soufre élémentaire est prévu, ainsi qu'une première unité d'oxydation (2) raccordée au four de fusion (1), dans laquelle le soufre fondu peut être oxydé en dioxyde de soufre, dans lequel une deuxième unité d'oxydation (5) est raccordée à la première unité d'oxydation (2), dans laquelle le dioxyde de soufre issu de la première unité d'oxydation (2) peut être oxydé en trioxyde de soufre, dans lequel au moins une unité d'oxydation supplémentaire (4) est en outre raccordée au four de fusion (1), dans lequel les gaz d'échappement formés lors de la fusion du soufre peuvent être soutirés du four de fusion (1) et peuvent être introduits au moins en partie dans l'unité d'oxydation supplémentaire (4), dans lequel les composants contenant du soufre des gaz d'échappement peuvent être oxydés en dioxyde de soufre dans l'unité d'oxydation supplémentaire (4), et dans lequel ce dioxyde de soufre peut être oxydé en trioxyde de soufre dans la deuxième unité d'oxydation (5).

10. Dispositif selon la revendication 9, dans lequel le four de fusion (1) est configuré sous émission.

11. Dispositif selon l'une quelconque des revendications 9 ou 10, dans lequel une tour d'absorption intermédiaire (11) formant une/l'étape d'absorption intermédiaire est raccordée à l'unité d'oxydation supplémentaire (4), dans lequel les gaz d'échappement contenant du dioxyde de soufre issus de l'unité d'oxydation supplémentaire (4) peuvent être introduits conjointement avec le gaz de processus issu de la deuxième unité d'oxydation (5) dans la tour d'absorption intermédiaire (11).

12. Dispositif selon la revendication 11, dans lequel la deuxième unité d'oxydation (5) est configurée sous la forme d'un convertisseur à plusieurs étapes, de préférence à deux étapes, dans lequel une première étape de convertisseur (10) du convertisseur est raccordée à la tour d'absorption intermédiaire (11), à condition que le gaz de processus puisse être introduit après la traversée de la première étape de convertisseur (10) avec les gaz d'échappement contenant du dioxyde de soufre issus de l'unité d'oxydation supplémentaire (4) dans la tour d'absorption intermédiaire (11).

13. Dispositif selon la revendication 12, dans lequel une deuxième étape de convertisseur (12) du convertisseur est raccordée à la tour d'absorption intermédiaire (11), à condition que les gaz d'échappement et le gaz de processus issus de la tour d'absorption intermédiaire (11) puissent être introduits dans la deuxième étape de convertisseur (12) .

14. Dispositif selon l'une quelconque des revendications 9 à 13, dans lequel l'étape d'absorption est raccordée à la deuxième unité d'oxydation (5) sous la forme d'une tour d'absorption finale (9) et dans lequel le trioxyde de soufre provenant de la deuxième unité d'oxydation (5) est absorbé dans la tour d'absorption finale (9).

15. Dispositif selon l'une quelconque des revendications 9 à 14, dans lequel une unité de récupération de chaleur (14) est raccordée à la tour d'absorption intermédiaire (11), avec laquelle unité de récupération de chaleur de l'énergie thermique et chimique est récupérée à partir des gaz d'échappement.
